(19) Europäisches Patentamt
European Patent Office
Office européen des brevets

(11) **EP 1 331 372 B1**

(12) **EUROPÄISCHE PATENTSCHRIFT**

(45) Veröffentlichungstag und Bekanntmachung des Hinweises auf die Patenterteilung:
**07.02.2007 Patentblatt 2007/06**

(51) Int Cl.:
*F01N 3/08* (2006.01)    *F02D 41/02* (2006.01)
*F01N 11/00* (2006.01)

(21) Anmeldenummer: **02028519.3**

(22) Anmeldetag: **19.12.2002**

(54) **Verfahren und Vorrichtung zum abgasnormkonformen Betreiben von NOx-Speicherkatalysatoren und zur Alterungsdiagnose derselben**

Method and apparatus for operating a NOx storage catalyst according to exhaust gas norms and for aging diagnosis of the catalyst

Méthode et appareil de fonctionnement d'un catalyseur accumulateur de NOx pour son utilisation conformément aux normes et pour diagnostiquer le vieillissement du catalyseur

(84) Benannte Vertragsstaaten:
**DE FR GB**

(30) Priorität: **24.01.2002 DE 10202521**

(43) Veröffentlichungstag der Anmeldung:
**30.07.2003 Patentblatt 2003/31**

(73) Patentinhaber: **Bayerische Motoren Werke Aktiengesellschaft**
**80809 München (DE)**

(72) Erfinder:
• **Hasenclever, Hanns-Christian, Dr.**
**80809 München (DE)**
• **Keenan, Matthew, Dr.**
**81539 München (DE)**
• **Ramatschi, Stephan**
**85604 Zorneding (DE)**
• **Preuss, Florian**
**80809 München (DE)**
• **Müller, Peter**
**81673 München (DE)**
• **Detterbeck, Stefan**
**80807 München (DE)**

(56) Entgegenhaltungen:
EP-A- 0 690 213        EP-A- 1 087 119
EP-A- 1 134 368        EP-A- 1 310 653
WO-A-01/84136          DE-A1- 10 019 245
US-A- 6 134 883

**Beschreibung**

Die vorliegende Erfindung betrifft ein Verfahren und eine Vorrichtung zum abgasnormkonformen Betreiben von $NO_x$-Speicherkatalysatoren mittels $NO_x$-Sensoren sowie insbesondere ein Verfahren und eine Vorrichtung zur abgasnormkonformen Diagnose des Alterungszustands eines $NO_x$-Speicherkatalysators.

In den letzten Jahren wurde eine zunehmende Anzahl von Technologien zur Optimierung der Verbrennung von Kraftstoffen entwickelt, unter anderem die Magerverbrennungstechnologie. Dabei wird Kraftstoff auf der "mageren" Seite eines stöchiometrischen Luft-Kraftstoff-Verhältnisses verbrannt, d.h. bei Luftüberschuß, wodurch sich die Kraftstoffausbeute im Teillastbetrieb verbessert.

Bei der Verbrennung eines solchen mageren Gemisches erzeugt der Motor im Abgas große Mengen an Stickoxiden ($NO_x$). Diese $NO_x$-Emissionen müssen aus Umweltschutzgründen möglichst auf Null reduziert werden, zumindest aber innerhalb gesetzlich vorgegebener Grenzwerte gehalten werden.

Zur Abgasnachbehandlung von direkt einspritzenden Ottomotoren werden $NO_x$-Speicherkatalysatoren eingesetzt.

Ein $NO_x$-Speicherkatalysator arbeitet nicht kontinuierlich zum Abgasvolumen hin, sondern speichert die abgegebenen $NO_x$-Emissionen ein. Der Katalysator ist also nach einem bestimmten absorbierten $NO_x$-Volumen gesättigt. Die Zeitdauer bis zum Sättigungszustand ist abhängig von der Betriebsweise des Motors und dauert typischerweise 30 bis 120 Sekunden.

Um die Reinigungsfähigkeit des Speicherkatalysators wieder herzustellen schließt sich an die Speicherphase eine Regenerationsphase an, in welcher der Motor gezielt kurzzeitig, nämlich ca. 2 bis 4 Sekunden lang, im unterstöchiometrischen, einem sogenannten "fetten" Luft-Kraftstoff-Verhältnis betrieben wird. Dabei werden die $NO_x$-Emissionen durch erhöhte CO- und HC-Emissionen reduziert.

Sobald alle Stickoxide im Speicherkatalysator reduziert sind, verläßt den Katalysator unreagiertes HC und CO. Dieses unterstöchiometrische Luft-Kraftstoff-Verhältnis wird von einem stromabwärts vom Speicherkatalysator positionierten Sensor gemessen. Diese Technologie offenbart z.B. die WO-A-94-17291. Dies ist der Beginn einer neuen Speicherphase, in der der Motor im überstöchiometrischen, also mageren Luft-Kraftstoff-Verhältnis betrieben wird.

Es besteht nun einerseits das Problem, einen $NO_x$-Speicherkatalysator so zu betreiben, daß die gesetzlich vorgegebenen Emissionsgrenzwerte eingehalten werden. Andererseits besteht das Problem, daß ein $NO_x$-Speicherkatalysator im Betrieb altert und sich seine Absorptionseigenschaften gegenüber dem Neuzustand verschlechtern. Von den Gesetzgebern in Europa und in den USA ist deshalb vorgeschrieben, daß $NO_x$-Speicherkatalysatoren einer sogenannten On-Board Diagnose an Bord von Kraftfahrzeugen zu unterziehen sind, um die Einhaltung der Grenzwerte und insbesondere die aktuelle Restspeicherkapazität eines im Betrieb gealterten Speicherkatalysators bewerten zu können, und feststellen zu können, ob ein Speicherkatalysator noch ein vorbestimmtes Minimum an Absorptionsfähigkeit erreicht oder nicht.

Aus der EP 1 087 119 A1 ist bereits ein Verfahren zur Regulierung von NOx-Emissionen im Abgastrakt einer Brennkraftmaschine bekannt, bei dem die NOx-Emissionen über eine vorbestimmte Wegstrecke ermittelt werden; und für den Fall, dass vor Erreichen dieser vorgegebenen Wegstrecke ein vorbestimmter NOx-Grenzwert erreicht wird, ein Spülvorgang der Abgas-Katalysatoreinrichtung eingeleitet wird. Hierfür wird das Luft-Kraftstoffverhältnis stöchiometrisch oder fett eingestellt.

Aus der DE 196 20 417 A1 sind Vorrichtungen und Verfahren zum Diagnostizieren des Alterungszustands eines Katalysators bekannt, wobei der Abgasstrom in einem Verbrennungsmotor gesteuert wird und wobei Sensoren zum Erfassen des Betriebszustands des Verbrennungsmotors verwendet werden. Die hierin beschriebenen Vorrichtungen und Verfahren gehen jedoch nicht speziell auf die Arbeitsweise eines Speicherkatalysators für Stickoxide, eines sogenannten $NO_x$-Speicherkatalysators, ein, sondern zielen vielmehr auf die Erzielung eines Zielwerts für das Luft-/Kraftstoff-Verhältnis einer in den Verbrennungsmotor einzusaugenden Mischung ab.

Aus der nicht offengelegten deutschen Patentanmeldung PA 10051012.4, welche hiermit durch Bezugnahme in die Offenbarung der vorliegenden Anmeldung eingeschlossen wird, sind insbesondere Verfahren und Vorrichtungen zum abgasnormkonformen Diagnostizieren der Speichereigenschaften eines $NO_x$-Speicherkatalysators bekannt. Dabei ist ein $NO_x$-Sensor im Abgasweg eines Verbrennungsmotors angeordnet, von welchem während einer Speicherphase $NO_x$ aus dem Abgas des Verbrennungsmotors gespeichert wird und während einer Regenerationsphase eine Katalyse des während der Speicherphase gespeicherten $NO_x$ durchgeführt wird. Dabei wird die aktuelle Ist-Speicherzeitdauer eines bereits gealterten $NO_x$-Speicherkatalysators mit einer Referenz-Speicherzeitdauer verglichen. Die Referenz-Speicherzeitdauer ist dabei die Speicherzeitdauer, die in einem Vorversuch für einen noch nicht gealterten Katalysator ermittelt worden ist, der mit den aktuell ermittelten Motorbetriebsparametern betrieben worden ist. Diese im Vorversuch ermittelten Referenzspeicherdauern sind in einem Betriebskennlinienfeld abgespeichert. Weicht die aktuell gemessene Ist-Speicherzeitdauer zu stark von der im Vorversuch ermittelten Referenz-Speicherzeitdauer ab, so ist dies ein Zeichen dafür, daß der $NO_x$-Speicherkatalysator zu sehr gealtert ist und nicht mehr ordnungsgemäß funktioniert.

Aufgabe der vorliegenden Erfindung ist es, Maßnahmen bereit zu stellen, mittels denen ein $NO_x$-Speicherka-

talysator abgasnormkonform betrieben werden kann und insbesondere die gesetzlich vorgeschriebene On-Board-Diagnose des Alterungszustands eines $NO_x$-Speicherkatalysators durchführbar ist, wobei die Genauigkeit der Diagnose der Speicherdauer gegenüber den aus der nicht offengelegten deutschen Patentanmeldung PA 10051012.4 verwendeten Verfahren verbessert ist.

Diese Aufgaben werden erfindungsgemäß durch ein Verfahren mit den Merkmalen des unabhängigen Anspruchs 1 und eine Vorrichtung mit den Merkmalen des unabhängigen Anspruchs 9 gelöst.

Die abhängigen Ansprüche betreffen vorteilhafte Ausführungsformen der vorliegenden Erfindung.

Die Erfindung beruht darauf, daß eine durchschnittliche fahrstreckenbezogene $NO_x$-Emission in [g/km] mit einem vorabbestimmten abgasnormkonformen Referenzemissionswert verglichen wird. Wird dieser abgasnormkonforme Referenzemissionswert überschritten, so wird die Magerphase abgebrochen und eine Regenerationsphase des $NO_x$-Speicherkatalysators ausgelöst, während welcher ein fettes Luftkraftstoffgemisch verbrannt wird. Dadurch wird sichergestellt, daß der $NO_x$-Speicherkatalysator stets abgasnormkonform betrieben wird.

Durch die Ermittlung der Anzahl der Abbrüche in einem Vergleichszeitraum ergibt sich ein Bewertungskriterium für den aktuellen Alterungszustand des $NO_x$-Speicherkatalysators.

Bei einer ersten Ausführungsform der vorliegenden Erfindung wird die durchschnittliche fahrstreckenbezogene $NO_x$-Emission in [g/km] dabei durch direkte Aufintegration eines während der Dauer einer Magerphase erfaßten fahrstreckenbezogenen Meßsignals eines speziellen $NO_x$-Sensors ermittelt.

Um die bekannten Meßungenauigkeiten handelsüblicher $NO_x$-Sensoren zu vermeiden und um insbesondere auch auf bereits an Bord eines Kraftfahrzeugs befindliche Meßsensoren zurückgreifen zu können, kann gemäß einer zweiten Ausführungsform der vorliegenden Erfindung die durchschnittliche fahrstreckenbezogene $NO_x$-Emission in [g/km] auch dadurch ermittelt werden, daß in einem Vorversuch mit kalibrierten $NO_x$-Sensoren ein funktionaler Zusammenhang zwischen verschiedenen Motorbetriebsparametern und der durchschnittlichen fahrstreckenbezogenen $NO_x$-Emission in [g/km] ermittelt wird. Dieser empirisch vorab bestimmte funktionale Zusammenhang wird dann im Fahrbetrieb eines Fahrzeugs zur Bestimmung einer durchschnittlichen fahrstreckenbezogenen $NO_x$-Emission auf Basis der Messung der verschiedenen Motorbetriebsparameter verwendet.

Die Vorteile und Merkmale der vorliegenden Erfindung ergeben sich auch aus der nachfolgenden Erläuterung von Ausführungsbeispielen in Verbindung mit den Zeichnungen.

Es zeigen:

Fig. 1 eine schematische Darstellung der Anordnung eines Verbrennungsmotors mit einem im Abgasstrom des Motors angeordneten $NO_x$-Speicherkatalysator und einer Rechen- und Steuereinrichtung, welche aus dem Meßsignal eines $NO_x$-Sensors eine durchschnittliche fahrstreckenbezogene $NO_x$-Emission ermittelt;

Fig. 2 eine schematische Darstellung der Anordnung eines Verbrennungsmotors mit einem im Abgasstrom des Motors angeordneten $NO_x$-Speicherkatalysator und einer Rechen- und Steuereinrichtung, welche aus dem Meßsignalen verschiedener Motorbetriebsparametersensoren eine durchschnittliche fahrstreckenbezogene $NO_x$-Emission ermittelt;

Fig. 3 eine schematische Darstellung der wechselseitigen Zusammenhänge zwischen verschiedenen Parametern, die die Arbeitsweise der in Fig. 1 und 2 gezeigten $NO_x$-Speicherkatalysatoren determinieren; und

Fig. 4 eine schematische Darstellung des funktionalen Zusammenhangs zwischen der durchschnittlichen fahrstreckenbezogenen $NO_x$-Emission der in Fig. 1 und 2 gezeigten $NO_x$-Speicherkatalysatoren und ausgewählter Motorbetriebsparameter.

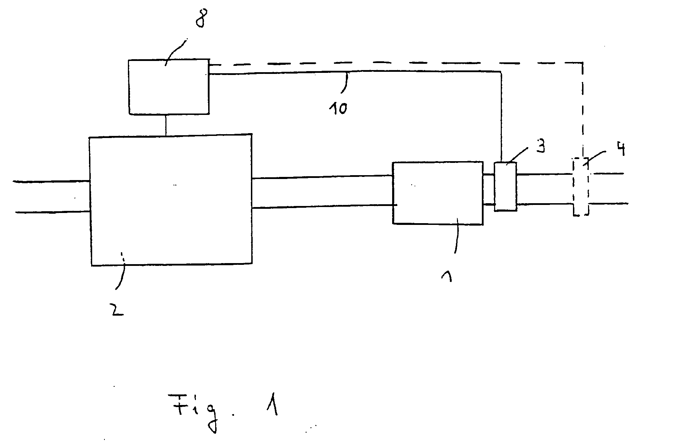

Die in Fig. 1 gezeigte Diagnosevorrichtung umfaßt einen Sensor 3, welcher sich stromabwärts von einem $NO_x$-Speicherkatalysator 1 befindet, der seinerseits wiederum abgasstromabwärts von einem Verbrennungsmotor 2 angeordnet ist. Der Sensor 3 kann sowohl die $NO_x$-Konzentration im Abgas messen, als auch das Luft-Kraftstoffverhältnis messen, und so als kombinierte $NO_x$-Sensor- und Lambdasonde wirken. Alternativ können ein separater $NO_x$-Sensor (Sensor 3) sowie eine separate Lambdasonde 4 zur Ermittlung des $O_2$-Partialdrucks im Abgas zur Ermittlung der Abgaszusammensetzung vorgesehen sein.

Das $NO_x$-Konzentrations-Signal des Sensors 3 wird auf eine Rechner- und Steuereinheit 8 (electronic control unit - ECU) gegeben und dort durch Aufintegration in eine durchschnittliche fahrstreckenbezogene $NO_x$-Emission in [g/km] umgerechnet. Diese durchschnittliche fahrstreckenbezogene $NO_x$-Emission in [g/km] wird in der ECU mit einem gesetzlichen Abgasnormwerten entsprechenden $NO_x$-Referenzemissionswert verglichen.

Wird dabei festgestellt, daß die durchschnittliche fahrstreckenbezogene $NO_x$-Emission in [g/km] den vorabbestimmten Referenzemissionswert überschreitet, so wird durch die Rechner- und Steuereinheit 8 eine Regenerationsphase des $NO_x$-Speicherkatalysators ausgelöst, während welcher ein fettes Luft-Kraftstoffgemisch verbrannt wird. Dadurch wird sichergestellt, daß der $NO_x$-Speicherkatalysator 1 stets abgasnormkonform betrieben wird.

Die Regenerationsphase wird, wie bekannt, durch das Lambda-Signal des Sensors 3 beendet, sobald dieser fettes Gemisch hinter dem $NO_x$-Speicherkatalysator anzeigt.

Dieses Verfahren erlaubt eine sehr genaue und variable Vorgabe der $NO_x$-Emission des Motors 2 für jeden Betriebspunkt.

Eine weitere Ausgestaltung dieser Vorgehensweise sieht zur Alterungsdiagnose des $NO_x$-Speicherkatalysators vor, daß von der Rechner- und Steuereinheit 8 ermittelt wird, wie oft innerhalb eines bestimmten Vergleichszeitraums eine Regenerationsphase eingeleitet wird.

Diese Zählung kann zum Beispiel dadurch erfolgen, daß ein Sensor eine binäre Information an die Rechner- und Steuereinheit liefert, ob aktuell eine Magerphase oder eine Regenerationsphase vorliegt. Diese Funktionalität kann insbesondere auch im Sensor 3 integriert sein, so daß dieser eine binäre Information liefert, ob das Abgas über- oder unterstöchiometrisch zusammengesetzt ist, ob also aktuell eine Magermischphase oder eine "fette" Phase vorliegt. Wird beim Abzählen der vom diesem Sensor eingehenden binären Informationen in der Rechner- und Steuereinheit 8 festgestellt, daß ein bestimmter Grenzwert für die Anzahl der Abbrüche der Magerphasen überschritten worden ist, hat also der $NO_x$-Speicherkatalysator 2 eine vorbestimmte Abzahl von Regenerationszyklen innerhalb eines Vergleichszeitraums durchlaufen, so hat er sein Alterungslimit erreicht und ist durch einen neuen $NO_x$-Speicherkatalysator zu ersetzen.

Als besonders vorteilhaft hat sich erwiesen, wenn die durchschnittliche fahrstreckenbezogene $NO_x$-Emission in [g/km] nach folgender Formel (Gleichung 1) durch Aufintegrieren des aktuellen $NO_x$-Konzentrations-Signals des Sensors 3 während der Magerphase ermittelt wird:

$$NO_x \, [g/km] = \frac{1}{Magerdauer} \bullet \int_0^{Magerdauer} \frac{K_{N\dot{O}_x} \bullet Konzentration_{NO_x} \bullet (\dot{m}_{Luft} + \dot{m}_{Kraftstoff})}{Fahrzeuggeschwindigkeit} \, dt$$

Dabei ist *Magerdauer* die Zeitspanne, während der der Kraftstoff im Ottomotor auf der mageren Seite eines stöchiometrischen Luft-Kraftstoff-Verhältnisses verbrannt wird.

$K_{NO}$ ist eine Umrechnungskonstante, mit der ein im Abgasstrom vorliegender Volumenstrom auf einen Massenstrom umgerechnet wird.

$\dot{m}_{Luft}$ und $\dot{m}_{Kraftstoff}$ sind der Luftmassenstrom und der Kraftstoffmassenstrom.

Während der für direkt einspritzende Ottomotoren mit $NO_x$-Speicherkatalysatoren typischen Magerphasen steigt diese durchschnittliche fahrstreckenbezogene $NO_x$-Emission kontinuierlich an. Sobald sie nun einen vorabbestimmten Grenzwert erreicht, wird die Speicherphase des $NO_x$-Speicherkatalysators 1 abgebrochen und durch die Rechner- und Steuereinheit 8 eine Regenerationsphase des $NO_x$-Speicherkatalysators 2 eingeleitet. Der vorabbestimmte Grenzwert kann so gewählt werden, daß er direkt einem gewünschten Ergebnis, also z.B. einem gesetzlichen Vorgabewert ($NO_x$-Referenzemissionswert), entspricht.

Wegen der bekannten Meßschwächen gebräuchlicher $NO_x$-Sensoren, welche insbesondere bei niedrigen $NO_x$-Konzentrationen oft das Problem zeigen, daß sie keine hinlänglich genaue Unterscheidung zwischen $NO_x$-Konzentrationen und $NH_3$-Konzentrationen ermöglichen, wird in einer weiteren Ausführungsform der vorliegenden Erfindung auf die Tatsache zurückgegriffen, daß an Bord eines Kraftfahrzeugs bereits eine Vielzahl von Sensoren eingesetzt sind, die spezielle Motorbetriebsparameter zuverlässig messen können.

Dabei wird weiterhin die Erkenntnis benutzt, daß das Speicherverhalten eines $NO_x$-Speicherkatalysators, insbesondere also auch seine durchschnittliche fahrstreckenbezogene $NO_x$-Emission durch eine Reihe von Motorbetriebsparametern eindeutig determiniert ist. Hat man in einem Vorversuch den funktionalen Zusammenhang zwischen solchen Motorbetriebsparametern und der durchschnittlichen fahrstreckenbezogenen $NO_x$-Emission eines bestimmten Typs eines $NO_x$-Speicherkatalysators mit hinlänglicher Genauigkeit ermittelt, so kann man im späteren Betrieb des $NO_x$-Speicherkatalysators dessen durchschnittliche fahrstreckenbezogene $NO_x$-Emission durch Messung der Motorbetriebsparameter und Auswertung der dabei ermittelten Meßwerte bestimmen. Dabei überwacht man in der Praxis der On-Board Diagnose des Speicherungsverhaltens eines in einem Kraftfahrzeug eingesetzten $NO_x$-Speicherkatalysators vorteilhafterweise solche Motorbetriebsparameter, für die schon aus anderen Gründen Sensoren in der Überwachungssensorik eines Kraftfahrzeugs vorgesehen sind.

Bei dieser Ausführungsform des erfindungsgemäßen Verfahrens werden also die von einer Überwachungssensorik in einem Kraftfahrzeug sowieso schon ermittelten Meßdaten über bestimmte Motorbetriebsparameter aufgrund empirisch vorab bestimmter Zusammenhänge so ausgewertet, daß man Werte für die aktuelle durchschnittliche fahrstreckenbezogene $NO_x$-Emission eines $NO_x$-Speicherkatalysators erhält. Diese durchschnittliche fahrstreckenbezoge-

ne NO$_x$-Emission wird dann mit einem abgasnormkonformen Referenzemissionswert eines nicht gealterten NO$_x$-Speicherkatalysators verglichen, um die aktuelle Magerphase abzubrechen zu können und eine neue Regenerationsphase einzuleiten.

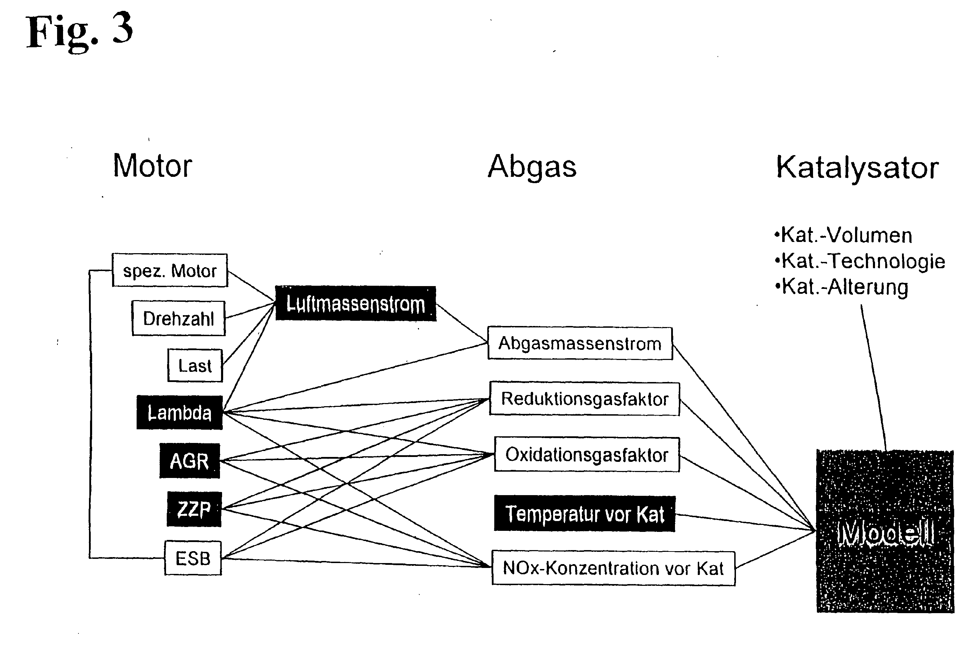

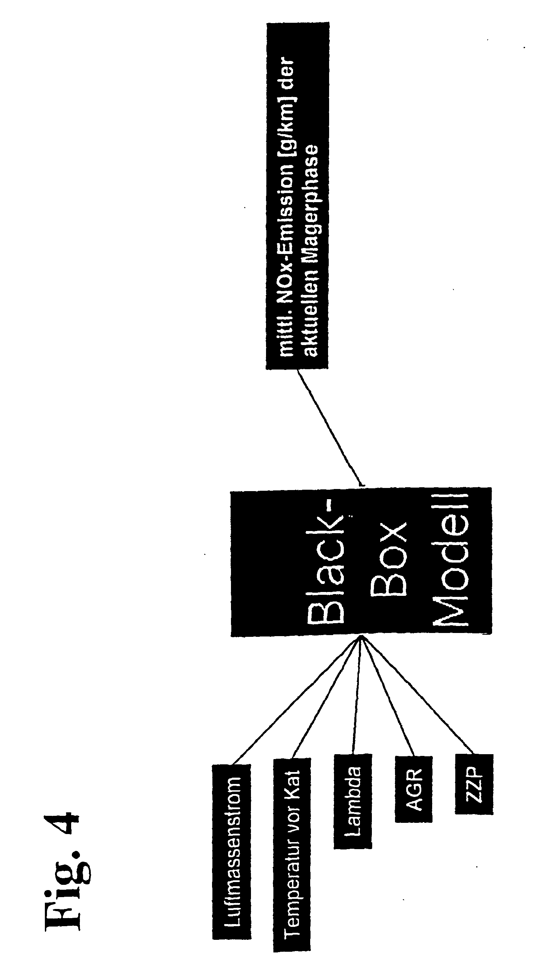

Der für das Zusammenwirken eines bestimmten Typs von NO$_x$-Speicherkatalysator 2 mit einem bestimmten Typ von Verbrennungsmotor charakteristische funktionale Zusammenhang zwischen durchschnittlicher fahrstreckenbezogener NO$_x$-Emission und Motorbetriebsparametern wird auf Basis der in Verbindung mit Fig. 3 und 4 schematisch dargestellten Modellbildung in einem Vorversuch ermittelt.

Fig. 3 zeigt schematisch empirisch bekannte wechselseitige Abhängigkeiten zwischen der Arbeitsweise eines NO$_x$-Speicherkatalysators 2 und abgasspezifischer bzw. motorspezifischer Kenngrößen.

Dabei ist der aktuelle Betriebszustand eines Verbrennungsmotors gekennzeichnet durch den speziellen Motortyp, seine aktuelle Drehzahl, seine aktuelle Last (Drehmoment), seinen zuströmungsseitigen Lambda-Faktor (Zusammensetzung des Luft-Kraftstoffgemisches), seine Abgasrückführrate AGR, seinen in der Regel fest eingestellten Zündzeitpunkt ZZP und den Einspritzbeginn ESB.

Der spezielle Motortyp, seine aktuelle Drehzahl, seine aktuelle Last und sein aktueller zuströmungsseitiger Lambda-Faktor legen den Luftmassenstrom des Verbrennungsmotors fest.

Der Luftmassenstrom, der Lambda-Faktor, die Abgasrückführrate, der Zündzeitpunkt und der Einspritzzeitpunkt determinieren ihrerseits wiederum die Beschaffenheit des Abgases, welche durch den Abgasmassenstrom, den Reduktionsgasfaktor, den Oxidationsgasfaktor, die Temperatur vor dem Katalysator und der NO$_x$-Konzentration vor dem Katalysator charakterisiert werden kann.

Um Art und Menge des einem Katalysator zuströmenden Abgases vollständig und genau charakterisieren zu können, wäre also an sich je ein spezieller Sensor für die Temperatur vor dem Katalysator, den Abgasmassenstrom, den Reduktionsgasfaktor, den Oxidationsgasfaktor und die NO$_x$-Konzentration vor dem NO$_x$-Speicherkatalysator 1 notwendig.

Vorteilhafterweise wird in der Praxis jedoch anstelle von Sensoren für die vier letztgenannten Größen auf bereits im Kraftfahrzeug vorhandene Sensoren zurückgegriffen.

In Fig. 3 sind die fünf Größen, die in der Praxis bevorzugterweise letztlich zur Charakterisierung des Speicherverhaltens des NO$_x$-Speicherkatalysators verwendet werden, durch dunkel hinterlegte Kästchen veranschaulicht.

Durch statistische Versuchsplanung werden nun in einem Vorversuch eine Vielzahl von Kombinationen dieser fünf Eingangsgrößen durchgespielt und parallel dazu die tatsächlichen fahrstreckenbezogenen durchschnittlichen NO$_x$-Emissionen eines NO$_x$-Speicherkatalysators exakt vermessen.

Aus dem bei diesen Vorversuchen ermittelten Zahlenmaterial lassen sich dann mittels bekannter numerischer Verfahren funktionale Zusammenhänge zwischen den in Form einer 5 x 5 Matrix darstellbaren fünf Eingangsgrößen und der tatsächlichen fahrstreckenbezogenen durchschnittlichen NO$_x$-Emission ermitteln.

Mit anderen Worten:

Durch Variation der Elemente einer 5 x 5 Matrix, in der die Eingangsgrößen unabhängig voneinander variiert werden und parallel dazu stattfindender Messung der tatsächlichen durchschnittlichen fahrstreckenbezogenen NO$_x$-Emission eines NO$_x$-Speicherkatalysators ist es möglich, einen funktionalen Zusammenhang zwischen den fünf Eingangsgrößen und der durchschnittlichen fahrstreckenbezogenen NO$_x$-Emission zu finden (z.B. in Form von Zurodnungstabellen oder aber auch z.B. in analytischer Form, wie z.B. in Form eines Polynom fünften Grades). Dieser funktionale Zusammenhang ermöglicht eine für praktische Zwecke hinlänglich genaue Berechnung einer durchschnittlichen fahrstreckenbezogenen NO$_x$-Emission in Abhängigkeit von den fünf Eingangsgrößen.

Die Korrelationen und Gesetzmäßigkeiten zwischen den fünf Eingangsgrößen und der durchschnittlichen fahrstreckenbezogenen NO$_x$-Emission werden bevorzugterweiser mit Hilfe neuronaler Netze oder anderer Black-Box Methoden ermittelt.

Fig. 4 zeigt eine schematische Darstellung eines Modellaufbaus für einen bestimmten Motor und bestimmten Katalysator.

Hierbei werden der Luftmassenstrom zum Motor, die Temperatur vor dem Katalysator, das Signal einer Lambdasonde hinter dem Motor, die Abgasrückführrate und der Zündzeitpunkt für einen gegebenen Motor und einen gegebenen Katalysator in einem Vorversuch systematisch variiert. Sodann wird die durchschnittliche fahrstreckenbezogene NO$_x$-Emission in Abhängigkeit von den fünf Eingabeparametern ermittelt und mittels numerischer Black-Box Methoden ein funktionaler Zusammenhang ermittelt.

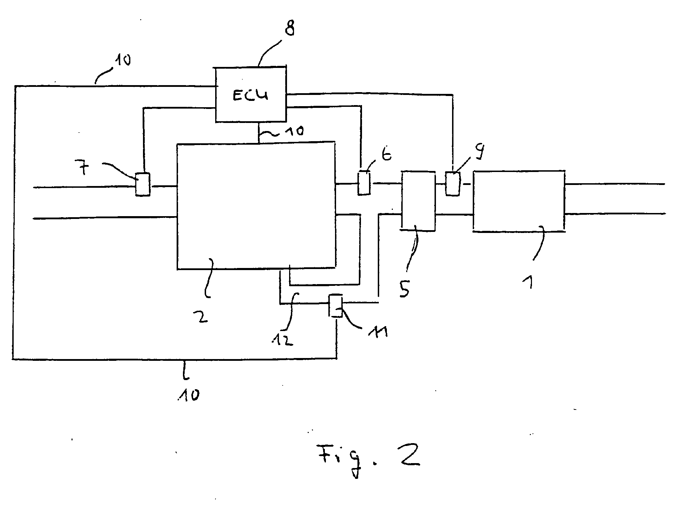

Dieser Zusammenhang wird in eine bereits an Bord eines Kraftfahrzeugs vorhandene Motorsteuerung, also z.B. die in Fig. 2 gezeigte Rechen- und Steuereinheit 8 eingespeist. Der funktionale Zusammenhang kann in der Rechen- und Speichereinheit 8 in Form einer Tabelle oder einer analytischen Darstellung hinterlegt sein.

Im normalen Fahrbetrieb wird nun die durchschnittliche fahrstreckenbezogene NO$_x$-Emission anhand der genannten fünf Parameter auf Basis des im Vorversuch ermittelten funktionalen Zusammenhangs berechnet.

Weiterhin ist in der Rechen- und Speichereinheit ein abgasnormkonformer Referenzemissionswert hinterlegt.

Überschreitet die im laufenden Betrieb ermittelte fahrstreckenbezogene durchschnittliche $NO_x$-Emission den Referenzwert, so wird die Magerphase abgebrochen und die Reduktionsphase eingeleitet.

Fig. 2 zeigt schematisch eine beispielhafte Anordnung eines Verbrennungsmotors 2 mit einem im Abgasstrom des Motors 2 angeordneten $NO_x$-Speicherkatalysator 1 und einer Diagnosevorrichtung zur Ermittlung einer durchschnittlichen fahrstreckenbezogenen $NO_x$-Emission auf Basis der Meßsignale verschiedener ausgewählter Motorbetriebsparametersensoren.

Diese Anordnung weist im Abgasweg vor dem Speicherkatalysator 1 einen Vorkatalysator 5 auf, von dem vorab HC und CO oxydiert und damit abgebaut werden, sowie eine Lambdasonde 6, über welche zur Steuerung des Verbrennungsmotors 2, insbesondere zur Einstellung und Regelung des Luft-Kraftstoff-Verhältnisses die Abgaszusammensetzung im ungereinigten Abgas unmittelbar hinter dem Verbrennungsmotor 2 ermittelt und an eine zugehörige Rechner- und Steuerungseinheit 8 geführt wird.

Die Vorrichtung hat ferner einen vor dem Verbrennungsmotor 2 angeordneten Luftmassensensor 7 zur Erfassung der dem Verbrennungsmotor zugeführten Luftmasse. Alternativ oder insbesondere zusätzlich zu dem Luftmassensensor 7 kann die Diagnose-Vorrichtung einen Kraftstoffmassensensor aufweisen.

Ein Sensor 9 liefert der Rechner- und Steuerungseinheit 8 aktuelle Meßdaten über die Temperatur im Abgasweg vor dem $NO_x$-Speicherkatalysator 1, welche wiederum die Temperatur $NO_x$-Speicherkatalysator 1 determiniert.

Ein Sensor 11 liefert der Rechner- und Steuerungseinheit 8 aktuelle Meßdaten über die Abgasrückführrate AGR, mit welcher Abgase über eine Abgasrückführleitung 12 zur Nachverbrennung in den Verbrennungsmotor 2 zurück geführt werden.

Alle genannten Sensoren sind über zugehörige elektrische Verbindungsleitungen 10 mit der Rechner- und Steuerungseinheit 8 verbunden.

Der Zündzeitpunkt des Verbrennungsmotors wird in der Regel fest eingestellt und kann als feste Größe in der Rechner- und Steuerungseinheit 8 abgespeichert sein.

Die Rechner- und Steuerungseinheit 8 umfaßt weiterhin Speichermittel, in denen der im Vorversuch ermittelte funktionale Zusammenhang zwischen Motorbetriebsparametern und der durch sie determinierten tatsächlichen fahrstreckenbezogenen durchschnittlichen $NO_x$-Emission eines bestimmten Typs eines $NO_x$-Speicherkatalysators abgespeichert ist.

Diese zweite Ausführungsform des erfindungsgemäßen Verfahrens ist direkt im Fahrzeug und mit wenig Aufwand applizierbar.

Diese zweite Ausführungsform des erfindungsgemäße Verfahren ist geeignet für eine Autoapplikation, bei dem jedes Fahrzeug den Neuzustand als Lernphase benutzt und sich anhand der im Neuzustand selbstgelernten Zusammenhänge während der gesamten Fahrzeuglebensdauer selbst diagnostizieren kann. Dadurch werden der Applikationsaufwand und die Entwicklungskosten erheblich reduziert.

Ebenso wie bei der ersten Ausführungsform, bei der eine direkte Messung der durchschnittlichen fahrstreckenbezogenen $NO_x$-Emission im laufenden Betrieb mittels eines speziellen $NO_x$-Sensors stattfindet, kann auch bei der auf der Ermittlung eines funktionalen Zusammenhangs zwischen Motorbetriebskenngrößen und einer durchschnittlichen fahrstreckenbezogenen $NO_x$-Emission beruhenden zweiten Ausführungsform ein Sensor verwendet werden, welcher eine binäre Information an die Rechner- und Steuerungseinheit (4) liefert, ob aktuell eine Magerphase oder eine Regenerationsphase des $NO_x$-Speicherkatalysators vorliegt, wobei diese Information in der Rechner- und Steuerungseinheit (4) zur Ermittlung der Anzahl der Abbrüche der Magerphase in einem bestimmten Vergleichsintervall ausgewertet wird. Wird eine bestimmte Anzahl von Zykluswechseln in einem Vergleichszeitraum überschritten, so ist dies ein Abbruchkriterium, um den gealterten $NO_x$-Speicherkatalysator auszuwechseln.

Bezugszeichenliste

| | |
|---|---|
| 1 | $NO_x$-Speicherkatalysator |
| 2 | Verbrennungsmotor |
| 3 | $NO_x$-Sonde (abgasstromseitig hinter dem $NO_x$-Speicherkatalysator) |
| 4 | Lambdasonde |
| 5 | Vorkatalysator |
| 6 | Lambdasonde |
| 7 | Luftmassensensor (vor dem Verbrennungsmotor) |
| 8 | Rechner- und Steuereinheit |
| 9 | Temperatursensor |
| 10 | Verbindungsleitungen |

11    Abgasrückführsensor
12    Abgasrückführleitung

**Patentansprüche**

**1.** Verfahren zum abgasnormkonformen Betreiben eines $NO_x$-Speicherkatalysators (1), welcher im Abgasweg eines Verbrennungsmotors (2) angeordnet ist und von welchem während einer Speicherphase $NO_x$ aus dem Abgas des Verbrennungsmotors (2) gespeichert wird und während einer Regenerationsphase eine Katalyse des während der Speicherphase gespeicherten $NO_x$ durchgeführt wird,
mit folgenden Verfahrensschritten:

a) Bestimmen einer während einer Magerphase, in der ein unterstöchiometrisches Luft-Kraftstoffgemisch verbrannt wird, anfallenden durchschnittlichen fahrstreckenbezogenen $NO_x$-Konzentration;
b) Vergleich der im Schritt a) anfallenden durchschnittlichen fahrstreckenbezogenen $NO_x$-Konzentration mit einem vorab bestimmten Grenzwert sowie Abbruch der Magerphase und Einleitung der Regenerationsphase des $NO_x$-Speicherkatalysators (1), sobald der vorabbestimmte Grenzwert erreicht ist;
c) Vergleich der Anzahl der Abbrüche der Magerphase in einem vorbestimmten Vergleichsintervall mit einem empirisch vorab bestimmten Grenzwert, wobei bei Überschreiten des Grenzwerts darauf geschlossen wird, dass der $NO_x$-Speicherkatalysator sein Alterungslimit erreicht hat.

**2.** Verfahren nach Anspruch 1, **dadurch gekennzeichnet, daß** die durchschnittliche fahrstreckenbezogene $NO_x$-Konzentration durch Aufintegration und Umrechnung der durch einen $NO_x$-Sensor (3) aktuell gemessenen $NO_x$-Konzentration im Abgasweg hinter dem Verbrennungsmotor (2) erfolgt.

**3.** Verfahren nach Anspruch 2, **dadurch gekennzeichnet, daß** die fahrstreckenbezogene durchschnittliche $NO_x$-Konzentration nach folgender Formel ermittelt wird:

$$NO_x\,[g/km] = \frac{1}{Magerdauer} \bullet \int_0^{Magerdauer} \frac{K_{NO_x} \bullet Konzentration_{NO_x} \bullet (\dot{m}_{Luft} + \dot{m}_{Kraftstoff})}{Fahrzeuggeschwindigkeit}\,dt$$

wobei:

$K_{NO}$ eine Umrechnungskonstante ist, mit der ein im Abgasstrom vorliegender Volumenstrom auf einen Massenstrom umgerechnet wird; und
$\dot{m}_{Luft}$ und $\dot{m}_{Kraftstoff}$ der Luftmassenstrom und der Kraftstoffmassenstrom sind.

**4.** Verfahren nach Anspruch 1,
**dadurch gekennzeichnet,**
**daß** in einem Vorversuch der funktionale Zusammenhang zwischen Motorbetriebsparametern und der durch sie determinierten durchschnittlichen fahrstreckenbezogenen $NO_x$-Konzentration eines bestimmten Typs eines $NO_x$-Speicherkatalysators (1) ermittelt wird;
**daß** im späteren Betrieb des $NO_x$-Speicherkatalysators (1) dessen aktuelle durchschnittliche fahrstreckenbezogene $NO_x$-Konzentration durch Messung der aktuellen Motorbetriebsparameter unter Zugrundelegung des vorab empirisch ermittelten funktionalen Zusammenhangs bestimmt wird.

**5.** Verfahren nach Anspruch 4, **dadurch gekennzeichnet, daß** folgende fünf Motorbetriebsparameter als die die durchschnittliche fahrstreckenbezogene $NO_x$-Konzentration determinierenden Motorbetriebsparameter zugrundegelegt werden:

- der Luftmassenstrom zum Verbrennungsmotor (2);
- die Temperatur im Abgasweg vor dem $NO_x$-Speicherkatalysator (1);
- der Lambda-Faktor (Verhältnis des Luftmassenstroms zum Kraftstoffmassenstrom auf dem Weg hin zum Verbrennungsmotor);

- die Abgasrückführrate (AGR) zurück zum Verbrennungsmotor (2);
- der Zündzeitpunkt (ZZP) des Verbrennungsmotors (2).

**6.** Verfahren nach Anspruch 4 oder 5, **dadurch gekennzeichnet, daß** der funktionale Zusammenhang zwischen fahrstreckenbezogener durchschnittlicher $NO_x$-Konzentration und den Motorbetriebsparametern mittels auf neuronalen Netzwerken beruhenden Methoden numerisch ermittelt worden ist.

**7.** Verfahren nach einem der Ansprüche 4 bis 6, **dadurch gekennzeichnet, daß** der funktionale Zusammenhang zwischen fahrstreckenbezogener durchschnittlicher $NO_x$-Konzentration und den Motorbetriebsparametern in Form von Kennlinienfeldern festgelegt wird.

**8.** Verfahren nach einem der Ansprüche 4 bis 6, **dadurch gekennzeichnet, daß** daß der funktionale Zusammenhang zwischen durchschnittlicher fahrstreckenbezogener $NO_x$-Konzentration und den Motorbetriebsparametern in Form einer analytischen Funktionsdarstellung festgelegt wird.

**9.** Vorrichtung zum Durchführen eines Verfahrens nach einem der Ansprüche 1 bis 8, welche umfaßt:

einen im Abgasweg eines Verbrennungsmotors (2) angeordneten $NO_x$-Speicherkatalysator (1);
einen im Abgasweg hinter dem $NO_x$-Speicherkatalysator (1) angeordneten Sensor (3), der die $NO_x$-Konzentration im Abgas messen kann,
eine Rechner- und Steuerungseinheit (8), welche das vom Sensor (3) stammende $NO_x$-Konzentrationssignal während einer Magerphase in eine durchschnittliche fahrstreckenbezogene $NO_x$-Konzentration umrechnet, und sobald die durchschnittliche fahrstreckenbezogene $NO_x$-Konzentration einen vorbestimmten Grenzwert erreicht hat, Abbruch der Magerphase und Einleitung einer Regenerationsphase des $NO_x$-Speicherkatalysators (1);

wobei die Rechner- und Steuerungseinheit (8) derart ausgebildet ist, dass die Anzahl der Abbrüche der Magerphase in einem bestimmten Vergleichsintervall mit einem empirisch vorab bestimmten Grenzwert verglichen wird, und bei Überschreiten des Grenzwerts darauf geschlossen wird, dass der $NO_x$-Speicherkatalysator sein Alterungslimit erreicht hat.

**10.** Vorrichtung nach Anspruch 9, wobei ein Sensor vorgesehen ist, um eine binäre Information an die Rechner- und Steuerungseinheit (4) zu liefern, ob aktuell eine Magerphase oder eine Regenerationsphase des $NO_x$-Speicherkatalysators vorliegt, welche in der Rechner- und Steuerungseinheit (4) zur Ermittlung der Anzahl der Abbrüche der Magerphase in einem bestimmten Vergleichsintervall ausgewertet werden kann.

**11.** Verwendung einer gemäß einem der Ansprüche 9-10 ausgebildeten Vorrichtung in einem Kraftfahrzeug.

**Claims**

**1.** A method for operating an $NO_x$ catalytic storage converter (1) according to exhaust gas norms, which is arranged in the exhaust gas path of an internal-combustion engine (2) and by which $NO_x$ from the exhaust gas of the internal-combustion engine (2) is stored during a storage phase and, during a regeneration phase, a catalysis of the $NO_x$ stored during the storage phase is carried out, comprising the following method steps:

a) determination of an average driving distance-related $NO_x$ concentration occurring during a lean phase, in which an air/fuel mixture rich of stoichiometry is burnt;
b) comparison of the average driving distance-related $NO_x$ concentration occurring in step a) with a limit value determined in advance and termination of the lean phase and introduction of the regeneration of the $NO_x$ catalytic storage converter (1), as soon as the predetermined limit value is reached;
c) comparison of the number of terminations of the lean phase in a predetermined comparison interval with a limit value determined empirically in advance, wherein, when the limit value is exceeded, it is concluded that the $NO_x$ catalytic storage converter has reached its ageing limit.

**2.** A method according to claim 1, **characterised in that** the average driving distance-related $NO_x$ concentration is produced by integration and conversion of the $NO_x$ concentration currently measured by an $NO_x$ sensor (3) in the exhaust gas path downstream from the internal-combustion engine (2).

3. A method according to claim 2, **characterised in that** the driving distance-related average NO$_x$ concentration is determined according to the following formula:

$$NO_x[g/km] = \frac{1}{lean\ duration} \bullet \int_0^{lean\ duration} \frac{K_{NOx} \bullet concentration_{NOx} \bullet (\dot{m}_{air} + \dot{m}_{fuel})}{vehicle\ speed} dt$$

wherein:

$K_{NO}$ is a conversion constant, with which a volume flow present in the exhaust gas flow is converted to a mass flow; and
$\dot{m}_{air}$ and $\dot{m}_{fuel}$ are the air mass flow and the fuel mass flow.

4. A method according to claim 1, **characterised in that**, in a preliminary test, the functional connection between motor operating parameters and the average driving distance-related NO$_x$ concentration determined by them, of a specific type of NO$_x$ catalytic storage converter (1) is determined; and **in that** during the subsequent operation of the NO$_x$ catalytic storage converter (1), its current average driving distance-related NO$_x$ concentration is determined by measuring the current engine operating parameters using the previously empirically determined functional connection as a basis.

5. A method according to claim 4, **characterised in that** the following five engine operating parameters are used as a basis for the motor operating parameters determining the average driving distance-related NO$_x$ concentration:

- the air mass flow to the internal-combustion engine (2);
- the temperature in the exhaust gas path upstream from the NO$_x$ catalytic storage converter (1);
- the lambda factor (ratio of the air mass flow to the fuel mass flow in the path to the internal-combustion engine);
- the exhaust gas recirculation rate (EGR) back to the internal-combustion engine (2);
- the ignition timing (IT) of the internal-combustion engine (2).

6. A method according to claim 4 or 5, **characterised in that** the functional connection between the driving distance-related average NO$_x$ concentration and the engine operating parameters has been determined numerically by means of methods based on neural networks.

7. A method according to any one of claims 4 to 6, **characterised in that** the functional connection between the driving distance-related average NO$_x$ concentration and the engine operating parameters is established in the form of characteristics fields.

8. A method according to any one of claims 4 to 6, **characterised in that** the functional connection between the average driving distance-related NO$_x$ concentration and the engine operating parameters is established in the form of an analytical function display.

9. A device for carrying out a method according to any one of claims 1 to 8, which comprises:

an NO$_x$ catalytic storage converter (1) arranged in the exhaust gas path of an internal-combustion engine (2);
a sensor (3) which is arranged in the exhaust gas path downstream from the NO$_x$ catalytic storage converter (1), which can measure the NO$_x$ concentration in the exhaust gas,
a computer and control unit (8), which converts the NO$_x$ concentration signal coming from the sensor (3) during a lean phase into an average driving distance-related NO$_x$ concentration, and as soon as the average driving distance-related NO$_x$ concentration has reached a predetermined limit value, termination of the lean phase and introduction of a regeneration phase of the NO$_x$ catalytic storage converter (1); wherein the computer and control unit (8) is configured in such a way that the number of terminations of the lean phase in a specific comparison interval is compared with a limit value determined in advance empirically and, when the limit value is exceeded, it is concluded that the NO$_x$ catalytic storage converter has reached its ageing limit.

**10.** A device according to claim 9, wherein a sensor is provided in order to supply binary information to the computer and control unit (4), as to whether a lean phase or a regeneration phase of the NO$_x$ storage catalyst is currently present, which can be evaluated in the computer and control unit (4) to determine the number of terminations of the lean phase in a certain comparison interval.

**11.** Use of a device configured according to any one of claims 9 to 10 in a motor vehicle.

**Revendications**

**1.** Procédé de fonctionnement, en conformité avec les normes des gaz d'échappement, d'un pot catalytique à accumulation de NO$_x$ (1) sur le trajet des gaz d'échappement d'un moteur à combustion interne (2), et selon lequel, pendant une phase d'accumulation, le NO$_x$ provenant des gaz d'échappement du moteur (2) est accumulé, tandis que pendant une phase de régénération, s'effectue une catalyse du NO$_x$ stocké pendant la phase d'accumulation, le procédé comprenant les étapes suivantes :

a) détermination de la valeur moyenne de la concentration en NO$_X$ pendant une phase à régime pauvre au cours de laquelle a lieu la combustion d'un mélange hypostoechiométrique air-carburant, par rapport au parcours effectué ;
b) comparaison de la valeur moyenne déterminée à l'étape a) à une valeur limite définie préalablement, avec arrêt de la phase pauvre et engagement de la phase de régénération du pot catalytique (1) dès que la valeur limite prédéfinie est atteinte ;
c) comparaison du nombre des arrêts de la phase pauvre pendant un intervalle de comparaison prédéfini, à une valeur limite définie empiriquement au préalable, le dépassement de la valeur limite permettant de déduire que le pot catalytique à accumulation de NO$_x$ a atteint sa limite de vieillissement.

**2.** Procédé selon la revendication 1,
**caractérisée en ce que**
la valeur moyenne de la concentration en NO$_X$, par rapport au parcours effectué est obtenue par conversion et conversion de la concentration actuelle en NO$_x$ mesurée par un capteur de NO$_x$ (3) sur le trajet des gaz d'échappement, en aval du moteur à combustion interne (2).

**3.** Procédé selon la revendication 2,
**caractérisée en ce que**
la valeur moyenne de la concentration en NO$_X$, par rapport au parcours effectué, est calculée par la formule :

$$NO_X\left[g/km\right] = \frac{1}{Durée\ de\ régime} \bullet \int_0^{Durée\ de\ régime} \frac{K_{NO_X} \bullet concentration\ NO_X \bullet \left(\dot{m}_{air} + \dot{m}_{carburant}\right)}{vitesse\ du\ véhicule}$$

dans laquelle
K$_{N0x}$ est une constante de conversion permettant de convertir un courant volumique dans le courant des gaz d'échappement en un courant massique.
$\dot{m}_{air}$ et $\dot{m}_{carburant}$ sont les courants massiques d'air et de carburant.

**4.** Procédé selon la revendication 1,
**caractérisée en ce que**

- dans un essai préalable, est établie la corrélation fonctionnelle entre des paramètres de fonctionnement du moteur et la valeur moyenne de la concentration en NO$_X$, déterminée par ces paramètres pour un type défini de pot catalytique à accumulation de NO$_x$ (1) par rapport au parcours effectué ;
- au cours du fonctionnement ultérieur du pot catalytique (1), la valeur moyenne de la concentration en NO$_X$ de ce pot, est déterminée par rapport au parcours effectué, par la mesure des paramètres actuels de fonctionnement du moteur sur la base de la corrélation fonctionnelle établie empiriquement au préalable.

**5.** Procédé selon la revendication 4,

**caractérisée en ce que**

cinq paramètres de fonctionnement du moteur sont pris comme base pour déterminer la valeur moyenne, de la concentration en NO$_x$, par rapport au parcours effectué, à savoir :

- le courant de masse d'air admis dans le moteur (2) ;
- la température sur le trajet des gaz d'échappement en amont du pot catalytique (1) ;
- le facteur lambda (rapport du courant de masse d'air au courant de masse de carburant, sur le trajet conduisant au moteur) ;
- le taux de recyclage des gaz d'échappement (AGR) revenant au moteur (2) ;
- l'instant d'allumage (ZZP) du moteur (2).

**6.** Procédé selon la revendication 4 ou 5,
**caractérisée en ce que**
la corrélation fonctionnelle entre la valeur moyenne de la concentration en NO$_x$, par rapport au parcours effectué, et les paramètres de fonctionnement du moteur, a été déterminée numériquement au moyen de méthodes reposant sur des réseaux neuronaux.

**7.** Procédé selon une des revendications 4 à 6,
**caractérisée en ce que**
la corrélation fonctionnelle entre la valeur moyenne de la concentration en NO$_x$, par rapport au parcours effectué, et les paramètres de fonctionnement du moteur est établie sous la forme de champs de caractéristiques.

**8.** Procédé selon la revendication 7,
**caractérisée en ce que**
la corrélation fonctionnelle entre la valeur moyenne de la concentration en NO$_x$, par rapport au parcours effectué, et les paramètres de fonctionnement du moteur est établie sous la forme d'une représentation analytique fonctionnelle.

**9.** Dispositif pour la mise en oeuvre d'un procédé selon une des revendications 1 à 8, comprenant :

- un pot catalytique à accumulation de NO$_x$ (1) disposé sur le parcours des gaz d'échappement d'un moteur à combustion interne (2) ;
- un capteur (3) sur le parcours des gaz d'échappement en aval du pot catalytique à accumulation de NO$_x$ (1), qui peut mesurer la concentration en NO$_x$ de ces gaz ;
- une unité de commande et de calcul (8) qui, pendant une phase à régime pauvre, transforme le signal de concentration en NO$_x$ délivré par le capteur (3) en une valeur moyenne de la concentration en NO$_x$, par rapport au parcours effectué, et qui, dès que cette valeur moyenne a atteint une valeur limite prédéfinie, arrête la phase à régime pauvre et engage une phase de régénération du pot catalytique à accumulation de NO$_x$ (1) ; étant précisé que l'unité de commande et de calcul (8) est constituée de manière que le nombre des arrêts de la phase à régime pauvre se produisant dans un intervalle de comparaison défini, est comparé à une valeur limite définie empiriquement au préalable, le dépassement de cette valeur limite permettant de conclure que le pot catalytique à accumulation de NO$_x$ a atteint sa limite de vieillissement.

**10.** Dispositif selon la revendication 9, dans lequel un capteur délivre à l'unité de commande et de calcul (8) une information binaire indiquant s'il existe actuellement une phase à régime pauvre ou une phase de régénération du pot catalytique à accumulation de NO$_x$ (1), cette information pouvant être exploitée dans l'unité de commande et de calcul (8) pour déterminer le nombre des arrêts dans la phase à régime pauvre pendant un intervalle de comparaison défini.

**11.** Utilisation dans un véhicule automobile d'un dispositif réalisé selon une des revendications 9 et 10.

Fig. 1

Fig. 2

# Fig. 3

Motor                    Abgas                    Katalysator

- Kat.-Volumen
- Kat.-Technologie
- Kat.-Alterung

spez. Motor

Drehzahl

Last

Lambda

AGR

ZZP

ESB

Luftmassenstrom

Abgasmassenstrom

Reduktionsgasfaktor

Oxidationsgasfaktor

Temperatur vor Kat

NOx-Konzentration vor Kat

Modell

EP 1 331 372 B1

# Fig. 4

mittl. NOx-Emission [g/km] der
aktuellen Magerphase

Black-
Box
Modell

Luftmassenstrom

Temperatur vor Kat

Lambda

AGR

ZZP